# FASCICULE DE BREVET EUROPEEN

(11) **EP 0 392 886 B1**
(45) Date de publication et mention de la délivrance du brevet: **11.05.1994**
(21) Numéro de dépôt: 90400474.4
(22) Date de dépôt: 21.02.1990
(51) Int. Cl.: C03B 23/03, C03B 27/004

(54) **Dispositif pour bomber et tremper des feuilles de verre**
Vorrichtung zum Biegen und Härten von Glasscheiben
Apparatus for bending and tempering glass sheets

(30) Priorité: 16.03.1989 DE 3908644
(43) Date de publication de la demande: 17.10.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kuster, Hans-Werner, D-5100 Aachen (DE); Vanaschen, Luc, B-4700 Eupen (BE); Promper, Hans-Josef, D-5100 Aachen (DE)
(74) Mandataire: Menes, Catherine

(56) Documents cités:
- EP-A- 0 277 074
- EP-A- 0 351 278
- DE-A- 1 471 872
- US-A- 3 459 521
- US-A- 4 743 285

## Description

L'invention a trait aux techniques de production de vitrages bombés et trempés dites de bombage-trempe par contact et selon lesquelles les vitrages sont pressés entre deux formes de bombage refroidies au contact desquelles ils sont également trempés thermiquement. Plus précisément l'invention concerne celles de ces techniques qui emploient pour transférer le verre dans et hors de la presse de bombage une bande transporteuse flexible laissée au contact du verre lors du pressage.

Dans la demande de brevet DE-A-14 71 872, il est décrit un dispositif de bombage-trempe de feuilles de verre comportant un four horizontal qui réchauffe les feuilles de verre à la température de bombage et qui est traversé par un convoyeur à rouleaux conduisant la feuille de verre dans une station de bombage par pressage à la suite de laquelle est disposée une station de refroidissement. Entre le four, ou plus précisément l'extrémité du convoyeur à rouleaux, et la station de refroidissement, la feuille de verre est prise en charge par une bande transporteuse flexible passant entre les formes de bombage par pressage et se déformant avec le verre. La presse de bombage est constituée de façon usuelle par une forme supérieure convexe et une forme inférieure concave. Le processus de bombage achevé, la feuille de verre est légèrement refroidie dans la station de bombage même, par une admission d'air froid sur chacune des deux faces ; elle acquiert ainsi une rigidité suffisante pour conserver la forme bombée qu'elle vient d'acquérir pendant toute la durée de son transfert vers la station de refroidissement, station de refroidissement où s'effectue à proprement dit la trempe thermique.

Avec un tel dispositif, il est possible de traiter des feuilles de verre de plus de 5 mm d'épaisseur. Avec du verre plus mince, le léger refroidissement de raidissement précédant la trempe suffit à abaisser la température interne de la feuille de verre en deçà de la température initiale requise pour une trempe thermique.

De plus, on connaît de la demande de brevet DE-A-1292806 un procédé de bombage et de trempe de feuilles de verre dans lequel la feuille de verre repose en position horizontale et est soutenue au cours de l'étape de pressage par un matelas élastique déformable, tendu, fait dans un tissu non combustible. Les formes de pressage peuvent être refroidies par la circulation d'un fluide en vue d'une trempe. Le matelas tendu entre les formes de pressage est selon un exemple de réalisation constitué par un tissu en fibres de verre renforcé par des fils métalliques.

Pour mettre en oeuvre ce procédé, il est nécessaire de prévoir des moyens de dépose sur ce matelas de la feuille de verre préalablement réchauffée dans le four. Ces moyens additionnels doivent être écartés dès que le verre est en position sur le matelas afin de permettre la fermeture de la presse de bombage ; cet écartement prend un certain temps pendant lequel la température des feuilles de verre diminue. Pour maintenir toutefois une température suffisamment élevée pour une trempe thermique, on compense par avance cette chute de température en surchauffant les feuilles de verre. Mais cette surchauffe a tendance à affecter la qualité optique des feuilles de verre en favorisant la déformation sur les rouleaux du four et ceci d'autant plus que le verre est mince et donc plus facilement malléable. En pratique ceci exclut à nouveau les feuilles de verre de moins de 5 mm d'épaisseur. Par ailleurs, la résistance thermique d'un tissu en fibres de verre renforcé par des fils métalliques est relativement élevée de sorte que le tissu s'oppose à un refroidissement rapide de la face inférieure de la feuille de verre.

L'invention a pour but un dispositif de bombage-trempe par contact permettant d'opérer avec des cadences de production élevées et de traiter des feuilles de verre de moins de 5 mm d'épaisseur.

Le dispositif selon l'invention comporte un four horizontal réchauffant les feuilles de verre à la température de bombage, traversé par un convoyeur à rouleaux qui aboutit dans une station de bombage par pressage dans laquelle la feuille de verre est prise en charge par une bande transporteuse flexible qui la transfère à plat entre les outils de bombage et qui est déformée en même temps que le verre lorsque s'effectue le bombage. Ce dispositif se caractérise par des outils de bombage constitués par des formes de bombage pleines, refroidies par un fluide de refroidissement et assurant de ce fait un bombage et une trempe au degré souhaité et par l'utilisation pour constituer la bande flexible d'un tissu ou tricot, en fibres réfractaires, dont la résistance thermique mesurée perpendiculairement au plan de la bande est comprise entre 0,25 10⁻³ et 5 10⁻³ m².K.W⁻¹ et avantageusement entre 10⁻³ et 2,5 10⁻³ m².K.W⁻¹ lorsqu'il s'agit de bomber et tremper une feuille de verre dont l'épaisseur est comprise entre 3 et 4 mm. Il s'agit donc ici d'un procédé de bombage-trempe par contact avec support de verre par une bande flexible.

Le dispositif selon l'invention permet à la fois des temps de cycle réduits par la réduction des temps morts dus notamment aux périodes où la presse de bombage est nécessairement ouverte par exemple pour permettre le retrait des outils servant à déplacer la feuille de verre. De plus, des formes de pressage pleines, refroidies par exemple à l'eau, sont entièrement en contact avec la surface de la feuille de verre ce qui assure un bon transfert de la chaleur des feuilles de verre vers les formes de pressage. D'autre part, la bande flexible ayant une résistance thermique relativement faible - et par corollaire une conductivité thermique relativement élevée - ce transfert de chaleur s'effectue également dans de bonnes conditions pour la face inférieure de la feuille de verre dont le refroidissement n'est pas fortement affecté par la présence de cet intercalaire constitué par la bande flexible. Dans ces conditions, des feuilles de verre de moins de 5 mm d'épaisseur peuvent être bombées et surtout trempées de manière pleinement satisfaisante.

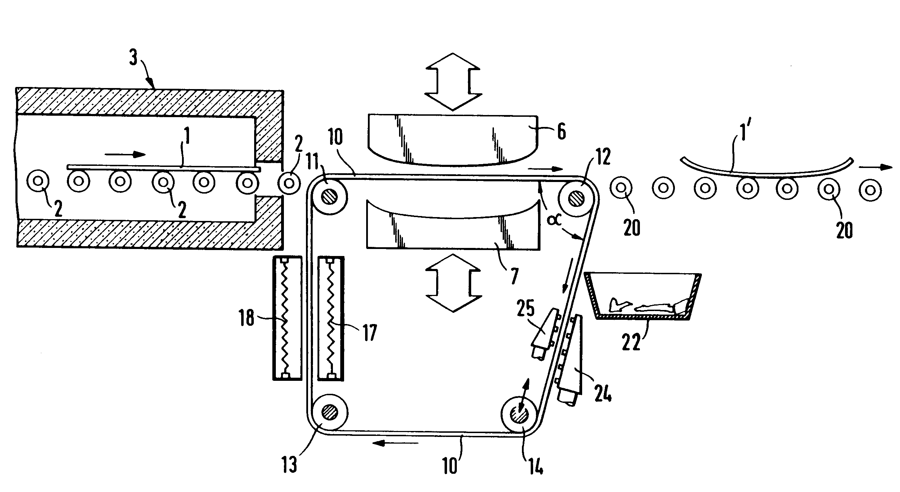

L'invention sera maintenant décrite plus en détail, en référence à la planche unique annexée montrant de façon schématique un dispositif conforme à un des modes de réalisation de l'invention.

La feuille de verre 1, destinée à être bombée et trempée, est transportée au travers d'un four traversant horizontal 3 par des rouleaux de transport moteurs 2. Elle est réchauffée dans ce four à sa température de bombage, c'est-à-dire aux environs de 650°C. A la sortie du four 3, la feuille de verre 1 pénètre dans la station de bombage dans laquelle sont disposées une forme de bombage supérieure convexe 6 et une forme de bombage inférieure concave 7, ces deux formes de bombage 6 et 7 réalisant une presse de bombage et étant de manière connue mais ici non représentée déplacées verticalement. Les deux formes de bombage 6 et 7 présentent une surface de bombage fermée et les matériaux qui constituent les parois des surfaces de bombage sont choisis très bons conducteurs de la chaleur. Ces deux formes 6 et 7 sont refroidies par un circuit d'eau de refroidissement. Ce dispositif de refroidissement, la construction et les matériaux des formes de bombage 6 et 7 sont réalisés de manière à obtenir la conductivité thermique nécessaire à une trempe thermique suffisante pour conférer aux feuilles de verre trempées les qualités d'un vitrage de sécurité.

La feuille de verre 1 chauffée est prise en charge par la bande transporteuse 10 déplacée à une vitesse identique à la vitesse tangentielle des rouleaux moteurs 2. Cette bande transporteuse est constituée par une bande sans fin entraînée par deux rouleaux de guidage supérieurs 11 et 12 et par deux rouleaux de renvoi inférieurs 13 et 14. Elle traverse la presse de bombage entre la forme supérieure 6 et la forme inférieure 7, de sorte qu'elle constitue lors du pressage une sorte d'intercalaire entre la surface de bombage de la forme inférieure 7. Lors de ce pressage, le rouleau de renvoi 14 est déplacé vers le haut pour donner du mou à la bande tout en la maintenant tendue.

Pour les motifs exposés précédemment, on choisit pour la bande 10 un tissu ou tricot dont la résistance thermique mesurée perpendiculairement à sa surface de dilatation est relativement faible. Il est à noter que cette résistance thermique dépend non seulement de la nature de fibres métalliques élémentaires utilisées pour fabriquer le tissu ou tricot, mais aussi du mode de tissage ou de tricotage.

Pour du verre de 6 mm d'épaisseur, cette résistance thermique doit être avantageusement comprise entre 2,5 10⁻³ et 5 10⁻³ m².K.W⁻¹. Pour du verre de 4 mm, elle doit être inférieure ou égale à 2,5 10⁻³ m².K.W⁻¹ et de préférence comprise entre 1,5 10⁻³ et 2,5 10⁻³ m².K.W⁻¹. Dans le cas d'une feuille de verre de 3 mm, la résistance thermique adéquate est inférieure à 1,6 10⁻³ m².K.W⁻¹ et de préférence comprise entre 10⁻³ et 1,5 10⁻³ m².K.W⁻¹. Enfin pour une épaisseur de verre de moins de 2 mm, cette résistance thermique doit être inférieure à 10⁻³ m².K.W⁻¹ et de préférence comprise entre 0,7 10⁻³ et 0,9 10⁻³ m².K.W⁻¹.

Le tricot ou tissu constituant la bande transporteuse est de préférence réalisé à partir d'un alliage fernickel-chrome, c'est-à-dire d'un acier réfractaire ou d'un alliage essentiellement à base de chrome et de nickel, par exemple un alliage à 15 % de chrome et 75 % de nickel. Pour la fabrication de ce tissu ou tricot, on utilise des fils obtenus à partir de fibres élémentaires dont le diamètre est compris entre 5 et 50 microns. Le diamètre de ces fils, de même que le mode de tricotage ou de tissage du tricot ou respectivement du tissu sont choisis de manière à satisfaire les exigences de tenue mécanique.

Afin d'éviter de refroidir la feuille de verre lors de sa prise en charge par la bande transporteuse, l'installation comporte également un dispositif de chauffage de la bande transporteuse 10 constitué d'éléments radiants électriques 17, 18 entre ou devant lesquels passe la bande 10 ainsi réchauffée à une température idoine. Le processus de bombage au moyen des formes de bombage refroidies 6 et 7 doit se dérouler de manière relativement rapide, car il est concomitant du processus de refroidissement aigu du verre dû au contact avec les formes de bombage refroidies. La presse de bombage reste fermée jusqu'à ce que une trempe complète de la feuille de verre soit obtenue. Elle est alors réouverte, la bande transporteuse 10 est à nouveau mise en mouvement et elle évacue la feuille de verre bombée et trempée 1' qu'elle décharge sur un convoyeur à rouleaux 20 qui mène la feuille de verre 1' par exemple vers un dispositif de refroidissement secondaire ici non représenté.

Comme on peut le voir sur le dessin, après son renvoi par le rouleau 12, la bande transporteuse repart selon une direction formant avec l'horizontale un angle α inférieur à 90°. Cet agencement permet de libérer un espace suffisant pour y placer une fosse à calcins 22 qui reçoit les bris de verre produits lors d'une casse, pendant le bombage et la trempe.

Par ailleurs, les derniers morceaux de verre, qui pourraient ne pas être tombés dans la fosse 22, sont débarrassés de la bande par un dispositif de nettoyage constitué par exemple de caissons de soufflage 24 et 25 dont les buses envoient de l'air comprimé.

Dans le mode de réalisation que nous venons de décrire, la bande transporteuse est constituée par une bande sans fin. Toutefois, on peut également se servir d'une bande transporteuse constituée par un morceau de tissu dont l'extrémité avant libre est déplacée selon un mouvement de va et vient au cours du cycle de fabrication et dont l'extrémité arrière s'enroule par exemple sur un tambour qui sert à la fois à donner du mou lors du pressage et à maintenir la bande tendue.

## Revendications

1. Dispositif pour bomber et tremper une feuille de verre (1) comportant un four horizontal (3) pour le réchauffage de la feuille de verre à la température de bombage, traversé par un convoyeur à rouleaux (2) aboutissant dans une station de bombage par pressage dans laquelle la feuille de verre est prise en charge par une bande transporteuse flexible (10) qui transfère la feuille de verre posée à plat entre les outils de bombage (6,7) et qui est déformée en même temps que la feuille de verre est bombée, **caractérisé** **en ce que** lesdits outils de bombage se composent de formes de bombage pleines (6, 7) refroidies par un fluide de refroidissement au contact desquels la feuille de verre est bombée et acquiert la trempe souhaitée, **et en ce que** ladite bande transporteuse flexible (10) est constituée d'un tissu ou tricot en fibres métallique réfractaire dont la résistance thermique, mesurée perpendiculairement au plan de la bande est comprise entre 0,25 10⁻³ à 5 10⁻³ m².K.W⁻¹.

2. Dispositif selon la revendication 1, **caractérisé en** **ce que** la bande transporteuse (10) est une bande sans fin entraînée en rotation par des rouleaux de guidage (11, 12) et des rouleaux de renvoi (13, 14).

3. Dispositif selon la revendication 1, **caractérisé en** **ce que** la bande transporteuse (10) est constituée par un morceau de tissu dont l'extrémité libre est déplacée selon un mouvement de va et vient au cours du cycle de fabrication.

4. Dispositif selon l'une des revendications précédentes, **caractérisé en ce que** le tissu ou tricot constituant la bande flexible (10) est formé de fils ou brins en fibres élémentaires en alliage fer-nickel-chrome.

5. Dispositif selon l'une des revendications 1 à 3, **caractérisé en ce que** le tissu ou tricot constituant la bande flexible (10) est formé de fils ou brins en fibres élémentaires en alliage nickel-chrome.

6. Dispositif selon la revendication 4 ou 5, **caractérisé** **en** **ce que** le diamètre desdites fibres élémentaires est compris entre 5 et 50 microns.

7. Dispositif selon l'une des revendications précédentes pour le bombage et la trempe d'une feuille de verre (1) de 3 à 4 mm d'épaisseur, **caractérisé en ce que** la résistance thermique du tissu ou tricot constituant la bande flexible (10), mesurée perpendiculairement au plan de la bande est comprise entre 10⁻³ et 2,5 10⁻³ m².K.W⁻¹.

8. Dispositif selon l'une des revendications précédentes, **caractérisé** par des éléments chauffants (17, 18) qui préchauffent la bande flexible (10) avant qu'elle ne prenne en charge la feuille de verre (1) sortant du four (3).

9. Dispositif selon l'une des revendications précédentes, **caractérisé par** un dispositif de nettoyage de la bande flexible (10) après le déchargement de la feuille de verre bombée-trempée (1') sur un convoyeur à rouleaux (20).

10. Dispositif selon la revendication 9, **caractérisé** **en** **ce que** ledit dispositif de nettoyage comporte des caissons de soufflage d'air comprimé (24, 25).

## Patentansprüche

1. Vorrichtung zum Biegen und Vorspannen einer Glasscheibe (1), mit einem einen Rollenförderer (2) aufweisenden Horizontalofen (3) zum Erwärmen der Glasscheibe auf Biegetemperatur, einer sich an den Horizontalofen anschließenden Preßbiegestation, in der die Glasscheibe von einem flexiblen Transportband (10) übernommen wird, das die Glasscheibe liegend zwischen die Biegewerkzeuge (6,7) überführt und das beim Biegen der Glasscheibe gleichzeitig verformt wird,
**dadurch gekennzeichnet**, daß die Biegewerkzeuge aus vollflächigen, flüssigkeitsgefüllten Formen (6,7) bestehen, durch deren Kontakt die Glasscheibe gebogen wird und die gewünschte Vorspannung erhält, und daß das flexible Transportband (10) aus einem Gewebe oder Gewirk aus hitzebeständigen Metallfasern besteht, deren Wärmedurchgangswiderstand, in Richtung senkrecht zur Ebene des Bandes gemessen, zwischen 0,25 · 10⁻³ bis 5 · 10⁻³ m² · K · W⁻¹ beträgt.

2. Vorrichtung nach Anspruch 1, dadurch gekennzeichnet, daß das Transportband (10) ein endloses Band ist, das durch Führungswalzen (11,12) und Umkehrwalzen (13,14) im Kreislauf geführt wird.

3. Vorrichtung nach Anspruch 1, dadurch gekennzeichnet, daß das Transportband (10) aus einem Gewebeabschnitt besteht, dessen freies Ende im Laufe des Fabrikationszyklus eine hin- und hergehende Bewegung ausführt.

4. Vorrichtung nach einem der voraufgehenden Ansprüche, dadurch gekennzeichnet, daß das das flexible Band (10) bildende Gewebe oder Gewirk aus Fäden oder Garnen hergestellt ist, die aus Elementarfasern aus einer Eisen-Nickel-Chrom-Legierung bestehen.

5. Vorrichtung nach einem der Ansprüche 1 bis 3, dadurch gekennnzeichnet, daß das das flexible Band (10) bildende Gewebe oder Gewirk aus Fäden oder Garnen hergestellt ist, die aus Elementarfasern aus einer NIckel-Chrom-Legierung bestehen.

6. Vorrichtung nach Anspruch 4 oder 5, dadurch gekennzeichnet, daß der Durchmesser der Elementarfasern 5 bis 50 Mikrometer beträgt.

7. Vorrichtung nach einem der voraufgehenden Ansprüche zum Biegen und Vorspannen einer Glasscheibe (1) von 3 bis 4 mm Dicke, dadurch gekennzeichnet, daß der Wärmedurchgangswiderstand des das flexible Band (10) bildenden Gewebes oder Gewirks, senkrecht zur Ebene des Bandes gemessen, 10⁻³ bis 2,5 · 10⁻³ m² · K · W⁻¹ beträgt.

8. Vorrichtung nach einem der voraufgehenden Ansprüche, gekennzeichnet durch Heizelemente (17,18) zum Vorwärmen des flexiblen Bandes (10), bevor dieses die vom Ofen (3) kommende Glasscheibe (1) übernimmt.

9. Vorrichtung nach einem der voraufgehenden Ansprüche, gekennzeichnet durch eine Vorrichtung zum Reinigen des flexiblen Bandes (10), nachdem die gebogene und vorgespannte Glasscheibe (1) auf einen Rollenförderer (20) übergeben ist.

10. Vorrichtung nach Anspruch 9, dadurch gekennzeichnet, daß die Reinigungsvorrichtung mit Druckluft beaufschlagbare Blaskästen (24,25) umfaßt.

## Claims

1. Device for bending and toughening a glass sheet (1), comprising a horizontal furnace (3) for reheating the glass sheet to the bending temperature, through which a roller conveyor (2) passes, leading to a station for bending by pressing, in which the glass sheet is taken over by a flexible conveyor belt (10), which transfers the glass sheet, positioned flat, between the bending tools (6, 7) and which is deformed at the same time as the glass sheet is bent, characterized in that said bending tools are composed of solid bending moulds (6, 7) cooled by a cooling fluid, in contact with which the glass sheet is bent and acquires the desired toughness, and in that said flexible conveyor belt (10) is constituted of a woven or knitted fabric of refractory metallic fibres, the thermal resistance of which, measured perpendicularly to the plane of the belt, is from 0.25 x 10⁻³ to 5 x 10⁻³ m².K.W⁻¹.

2. Device according to Claim 1, characterized in that the conveyor belt (10) is an endless belt driven in rotation by guiding rollers (11, 12) and return rollers (13, 14).

3. Device according to Claim 1, characterized in that the conveyor belt (10) is formed of a piece of woven, the free end of which is displaced in a reciprocating movement during the production cycle.

4. Device according to one of the preceding Claims, characterized in that the woven or knitted fabric constituting the flexible belt (10) is formed of threads or strands of elementary fibres of iron-nickel-chrome alloy.

5. Device according to one of Claims 1 to 3, characterized in that the woven or knitted fabric constituting the flexible belt (10) is formed of threads or strands of elementary fibres of nickelchrome alloy.

6. Device according to Claim 4 or 5, characterized in that the diameter of said elementary fibres is from 5 to 50 microns.

7. Device according to one of the preceding Claims for the bending and toughening of a glass sheet (1) of 3 to 4 mm thickness, characterized in that the thermal resistance of the woven or knitted fabric constituting the flexible belt (10), measured perpendicularly to the plane of the belt, is from 10⁻³ to 2.5 x 10⁻³ m².K.W⁻¹.

8. Device according to one of the preceding Claims, characterized by heating elements (17, 18) which preheat the flexible belt (10) before it takes over the glass sheet (1) leaving the furnace (3).

9. Device according to one of the preceding Claims, characterized by a cleaning device for the flexible belt (10) for cleaning it after discharge of the bent and toughened glass sheet (1') onto a roller conveyor (20).

10. Device according to Claim 9, characterized in that said cleaning device comprises compressed air blowing boxes (24, 25).
